# EUROPÄISCHE PATENTANMELDUNG

(11) **EP 1 243 407 A1**
(43) Veröffentlichungstag der Anmeldung: **25.09.2002**
(21) Anmeldenummer: 02007961.2
(22) Anmeldetag: 05.11.1998
(51) Int. Cl.: B32B 15/01, H01R 13/03, C22C 9/04

(54) **Verfahren zur Herstellung eines elektrisch leitfähigen Metallbands**

(62) Teilanmeldung aus: 98120963.8
(71) Anmelder: STOLBERGER METALLWERKE GMBH & CO. KG, D-52222 Stolberg (DE)
(72) Erfinder: Rumbach, Albert, 52076 Aachen (DE); Adler, Udo, 52249 Eschweiler (DE)

(57) **Zusammenfassung**

Das Verfahren zur Herstellung eines elektrisch leitfähigen Metallbands als Ausgangsmaterial für elektrische Kontaktbauteile sieht zunächst vor, daß ein Kernband aus einem Kupferwerkstoff mit einer Dicke zwischen 3 mm und 4 mm sowie mit einer elektrischen Leitfähigkeit von mindestens zwischen 20 m/Ωmm² hinsichtlich mindestens einer Flachseite aufgerauht wird. Diese Flachseite wird anschließend auf dem Wege des Walzplattierens mit einer 0,15 mm bis 0,20 mm dicken Metallauflage aus einer Kupfer-Nickel-Zink-Legierung in einer chemischen Zusammensetzung von 53,5 bis 56.5 Gew.-% Kupfer, 16,5 bis 19,5 Gew.-% Nickel, max. 0,2 Gew.-% Zinn, max. 0,3 Gew.-% Eisen, max. 0,5 Gew.-% Verunreinigungen und Rest Zink, bzw. 60,0 bis 63,0 Gew.-% Kupfer, 17,0 bis 19,0 Gew.-% Nickel, max. 0,2 Gew.-% Zinn, max. 0,3 Gew.- % Eisen, hax. 0,5 Gew.-% Verunreinigungen und Rest Zink, bzw. 63,0 bis 66,0 Gew.-% Kupfer, 11,0 bis 13,0 Gew.-% Nickel, max. 0,2 Gew.-% Zinn, max. 0,3 Gew.-% Eisen, max. 0,5 Gew.-% Verunreinigungen und Rest Zink versehen. Dies erfolgt unter Zugabe einer Walzemulsion. Letztlich wird das derart walzplattierte Metallband einer Diffusionsglühung unterworfen.

## Beschreibung

Die Erfindung betrifft ein Verfahren zur Herstellung eines elektrisch leitfähigen Metallbands als Ausgangsmaterial für elektrische Kontaktbauteile, wie z.B. Steckverbinder.

Bänder aus Kupferwerkstoffen mit Beschichtungen aus unterschiedlichen Metallen bzw. Metallegierungen werden bei der Fertigung von Massenteilen in der elektronischen und elektrischen Industrie aus wirtschaftlichen und technischen Gründen weit verbreitet eingesetzt. Aus einem solchen Vormaterial werden beispielsweise Anschlußklemmen, Leiterbahnen oder Steckverbinder in verschiedener Form und andere Verbindungsteile hergestellt.

Kupferwerkstoffe kommen hierbei wegen ihrer hohen Leitfähigkeit zum Einsatz. Es kann sich z.B. um niedrig legierte Kupferwerkstoffe, um Kupfer-Eisen-Legierungen oder um Reinkupfer handeln. Zum Schutz gegen Korrosion und Verschleiß sowie zur Erhöhung der Oberflächenhärte wird der Kupferwerkstoff mit einem metallischen Überzug versehen, wobei in der Regel Zinn als Überzugsmetall verwendet wird. Üblich ist eine galvanische Beschichtung oder der Auftrag der Beschichtung im Schmelztauchverfahren.

Generell werden an die elektrischen Kontaktbauteile hohe technische und qualitative Anforderungen, insbesondere hinsichtlich der mechanischen und elektrischen Eigenschaften, gestellt. Dies gilt insbesondere beim Einsatz der Kontaktbauteile unter schwierigen oder aggressiven Umgebungsbedingungen, beispielsweise für Steckverbinder in der Kraftfahrzeugelektrik und hier vor allem in der Motorelektronik.

Unter solch schwierigen Umgebungsbedingungen können Anforderungen auftreten, vor allem hinsichtlich der Temperatur- oder Relaxationsbeständigkeit und der Korrosionsfestigkeit, denen elektrische Kontaktbauteile bekannten Aufbaus nicht mehr oder nur bedingt gerecht werden. So findet beispielsweise der Einsatz von bekannten Beschichtungswerkstoffen, wie Zinn, Silber oder Gold und deren Legierungen bei einer Temperatur von maximal 150 °C seine Grenze.

Der Erfindung liegt - ausgehend vom Stand der Technik - die Aufgabe zugrunde, ein Verfahren zur Herstellung eines elektrisch leitfähigen Metallbands als Ausgangsmaterial für elektrische Kontaktbauteile zu schaffen, bei welchem das Metallband eine hohe Temperatur- und Relaxationsbeständigkeit, Abriebfestigkeit und Härte bei guter Umformbarkeit und Duktilität aufweist.

Die Lösung dieser Aufgabe besteht nach der Erfindung in den Merkmalen des Patentanspruchs 1 oder des Patentanspruchs 2 oder des Patentanspruchs 3.

Danach wird bei der Herstellung des elektrisch leitfähigen Metallbands zunächst ein Kernband aus einem Kupferwerkstoff mit einer Dicke zwischen 3 mm und 4 mm sowie mit einer elektrischen Leitfähigkeit von mindestens 20 m/Ωmm² eingesetzt. Der Kupferwerkstoff kann als niedrig legierter Kupferwerkstoff aus einer Kupfer-Eisen-Legierung oder aus Reinkupfer bestehen. Die chemische Zusammensetzung von für die Praxis besonders gut als Werkstoff für das Kernband geeigneten Materialien ist in der nachfolgenden Tabelle 1 zusammengestellt.

**Tabelle 1:**

| Kernbandwerkstoffe | | | | | | | | | |
|---|---|---|---|---|---|---|---|---|---|
| Legierung | Cu % | Fe % | P % | Zn % | Sn % | Mg % | Ni % | Si % | Ag % |
| A | Rest | | 0,010 - 0,100 | | | | 0,80 - 1,80 | 0,15 - 0,35 | |
| B | min. 99,2 | | 0,002 - 0,120 | | 0,050 - 0,30 | 0,050 - 0,150 | | | 0,010 - 0,10 |
| C | min. 99,0 | | max. 0,10 | | | 0,400 - 0,800 | | | |
| D | min. 97,0 | 2,10 - 2,60 | 0,015- 0,150 | 0,050 - 0,200 | | max: 0,100 | | | |
| E | Rest | | | | 0,15 - 0,25 | | | | |
| F | Rest | | | 0,5 - 1,5 | 0,2 - 0,8 | | 1,3 - 2,7 | 0,2 - 0,8 | |
| G | Rest | 2,10 - 2,60 | 0,015 - 0,040 | max. 0,25 | max. 0,1 | max. 0,1 | max. 0,1 | max. 0,1 | max. 0,1 |

Dieses Kernband wird zunächst auf mindestens einer Flachseite aufgerauht. Das Aufrauhen kann durch Bürsten, Strahlen oder Beizen erfolgen.

Im Anschluß daran wird die aufgerauhte Flachseite auf dem Wege des Walzplattierens, vorzugsweise Kaltwalzplattieren, mit einer 0,15 mm bis 0,20 mm dicken Metallauflage aus einer Kupfer-Nickel-Zink-Legierung unter Zugabe einer Walzemulsion versehen. Die Kupfer-Nickel-Zink-Legierung hat nach Patentanspruch 1 eine chemische Zusammensetzung in Gew.% von 53,5 bis 56,5 Kupfer 16,5 bis 19,5 Nickel, max. 0,2 Zinn, max. 0,3 Eisen, max. 0,5 Verunreinigungen und Rest Zink, nach Patentanspruch 2 max. 60,0 bis 63,0 Kupfer, 17,0 bis 19,0 Nickel, max. 0,2 Zinn, max. 0,3 Eisen, max. 0,5 Verunreinigungen und Rest Zink und nach Patentanspruch 3 63,0 bis 66,0 Kupfer, 11,0 bis 13,0 Nickel, max. 0,2 Zinn, max. 0,3 Eisen, max. 0,5 Verunreinigungen und Rest Zink.

Je nach Beanspruchung und Festigkeit des elektrisch leitfähigen Metallbands kann die Metallauflage in verschiedenen Dicken aufgebracht werden. Auch ist es möglich, bei einer doppelseitigen Plattierung auf beiden Seiten des Kernbands eine Metallauflage mit einer unterschiedlichen chemischen Zusammensetzung aufzutragen.

Nach dem Walzplattieren hat das Metallband je nach vorgenommenem Abwalzgrad eine Gesamtdicke zwischen 0,10 mm bis 1,5 mm. Anschließend wird das Metallband wärmebehandelt. Die Wärmebehandlung erfolgt durch ein Diffusionsglühen zur Erzielung eines dichten fest anhaftenden Überzugs.

Ein derartig geschaffenes Metallband, welches sich hinsichtlich seiner Oberflächeneigenschaften, Korrosions- bzw. Anlaufbeständigkeit und Abriebfestigkeit wie ein massives Band aus einer Kupfer-Nickel-Zink-Legierung (Neusilber) verhält, besitzt jedoch eine wesentlich höhere elektrische Leitfähigkeit. Darüber hinaus weist das derart hergestellte Metallband eine hohe Temperaturbeständigkeit von über 150 °C auf. Praktische Versuche haben gezeigt, daß die Relaxationsbeständigkeit bzw. die Federeigenschaften auch nach längerer statischer oder dynamischer Belastung sehr gut sind.

Insbesondere bei elektrischen Steckverbindern aus dem erfindungsgemäß hergestellten Metallband kann der Einsatzbereich durch die Verbesserung der Temperaturbeständigkeit in Kombination mit den guten mechanischen und elektrischen Eigenschaften des Werkstoffverbunds vergrößert werden. Solche Steckverbinder sind in der Lage, über einen langen Zeitraum unter vorhandenen mechanischen, elektrischen und klimatischen Umweltbedingungen zuverlässig und häufig wiederholbar sowohl eine elektrische Verbindung herzustellen als auch sicher zu trennen.

Eine vorteilhafte Ausführungsform der Erfindung besteht nach Patentanspruch 4 darin, wenn die elektrische Leitfähigkeit des Kupferwerkstoffs für das Kernband zwischen 23 m/Ωmm² und 45 m/Ωmm² liegt.

Die Zusammensetzung der Metallauflagen gemäß den Patentansprüchen 1, 2 und 3 ist aus der nachfolgenden Tabelle 2 erkennbar.

**Tabelle 2:**

| Plattierungswerkstoffe | | | | | | |
|---|---|---|---|---|---|---|
| Legierung | Cu % | Ni % | Zn % | Sn % | Fe % | Sonstige |
| CuNi18Zn27 | 53,50 - 56,50 | 16,50 - 19,50 | Rest | max. 0,2 | max. 0,3 | max. 0,5 |
| CuNi18Zn20 | 60,00 - 63,00 | 17,00 - 19,00 | Rest | max. 0,2 | max. 0,3 | max. 0,5 |
| CuNi12Zn24 | 63,00 - 66,00 | 11,00 - 13,00 | Rest | max. 0,2 | max. 0,3 | max. 0,5 |

## Patentansprüche

1. Verfahren zur Herstellung eines elektrisch leitfähigen Metallbands als Ausgangsmaterial für elektrische Kontaktbauteile, bei welchem ein Kernband aus einem Kupferwerkstoff mit einer Dicke zwischen 3 mm und 4 mm sowie mit einer elektrischen Leitfähigkeit von mindestens 20 m/Ωmm² zunächst hinsichtlich mindestens einer Flachseite aufgerauht, danach die aufgerauhte Flachseite auf dem Wege des Walzplattierens mit einer 0,15 mm bis 0,20 mm dicken Metallauflage aus einer Kupfer-Nickel-Zink-Legierung in einer chemischen Zusammensetzung von 53,5 bis 56,5 Gew.-% Kupfer, 16,5 bis 19,5 Gew.-% Nickel, max. 0,2 Gew.-% Zinn, max. 0,3 Gew.-% Eisen, max. 0,5 Gew.-% Verunreinigungen und Rest Zink unter Zugabe einer Walzemulsion versehen und anschließend das walzplattierte Metallband einer Diffusionsglühung unterworfen wird.

2. Verfahren zur Herstellung eines elektrisch leitfähigen Metallbands als Ausgangsmaterial für elektrische Kontaktbauteile, bei welchem ein Kernband aus einem Kupferwerkstoff mit einer Dicke zwischen 3 mm und 4 mm sowie mit einer elektrischen Leitfähigkeit von mindestens 20 m/Ωmm² zunächst hinsichtlich mindestens einer Flachseite aufgerauht, danach die aufgerauhte Flachseite auf dem Wege des Walzplattierens mit einer 0,15 mm bis 0,20 mm dicken Metallauflage aus einer Kupfer-Nickel-Zink-Legierung in einer chemischen Zusammensetzung von 60,0 bis 63,0 Gew.-% Kupfer, 17,0 bis 19,0 Gew.-% Nickel, max. 0,2 Gew.-% Zinn, max. 0,3 Gew.-% Eisen, max. 0,5 Gew.-% Verunreinigungen und Rest Zink unter Zugabe einer Walzemulsion versehen und anschließend das walzplattierte Metallband einer Diffusionsglühung unterworfen wird.

3. Verfahren zur Herstellung eines elektrisch leitfähigen Metallbands als Ausgangsmaterial für elektrische Kontaktbauteile, bei welchem ein Kernband aus einem Kupferwerkstoff mit einer Dicke zwischen 3 mm und 4 mm sowie mit einer elektrischen Leitfähigkeit von mindestens 20 m/Ωmm² zunächst hinsichtlich mindestens einer Flachseite aufgerauht, danach die aufgerauhte Flachseite auf dem Wege des Walzplattierens mit einer 0,15 mm bis 0,20 mm dicken Metallauflage aus einer Kupfer-Nickel-Zink-Legierung in einer chemischen Zusammensetzung von 63,0 bis 56,5 Gew.-% Kupfer, 11 bis 13,0 Gew.-% Nickel, max. 0,2 Gew.-% Zinn, max. 0,3 Gew.-% Eisen, max. 0,5 Gew.-% Verunreinigungen und Rest Zink unter Zugabe einer Walzemulsion versehen und anschließend das walzplattierte Metallband einer Diffusionsglühung unterworfen wird.

4. Verfahren nach einem der Patentansprüche 1 bis 3, bei welchem die elektrische Leitfähigkeit des Kupferwerkstoffs zwischen 23 m/Ωmm² und 45 m/Ωmm² liegt.
